# EUROPÄISCHE PATENTSCHRIFT

(11) **EP 1 190 838 B1**
(45) Veröffentlichungstag und Bekanntmachung des Hinweises auf die Patenterteilung: **19.04.2006**
(21) Anmeldenummer: 01121696.7
(22) Anmeldetag: 17.09.2001
(51) Int. Cl.: B29C 65/16, B23K 26/06

(54) **Vorrichtung und Verfahren zum Verschweissen von Werkstücken**
Apparatus and method for welding workpieces
Dispositif et procédé pour le soudage de pièces

(30) Priorität: 20.09.2000 DE 10046361
(43) Veröffentlichungstag der Anmeldung: 27.03.2002
(73) Patentinhaber: Hella KGaA Hueck & Co., 59552 Lippstadt (DE)
(72) Erfinder: Muschner, Andreas, 33100 Paderborn (DE); Hoppe, Friedbert, 59558 Lippstadt (DE); Dirks, Heinz-Michael, 59558 Lippstadt (DE); Seipel, Arnold, 33181 Wünnenberg (DE); Seggedi, Hans Peter, 28816 Stuhr (DE)

(56) Entgegenhaltungen:
- EP-A- 0 472 850
- EP-A- 0 942 139
- EP-A- 0 997 261
- WO-A-00/43183
- WO-A-96/33838
- DE-A- 19 510 493
- DE-C- 19 801 346
- US-A- 4 963 714
- PUETZ H ET AL: "DIODENLASER UND KUNSTSTOFF - EINE IDEALE VERBINDUNG DIODE LASERS AND PLASTICS - AN IDEAL COMBINATION" LASEROPTO, AT FACHVERLAG, STUTTGART, DE, Bd. 31, Nr. 1, 1999, Seiten 78-79, XP001032098 ISSN: 1437-3041
- ULLMANN C ET AL: "SCANNER AM DIODENLASER FLEXIBLES KUNSTSTOFFSCHWEISSEN MIT DIODENLASER UND SCANNER" LASER PRAXIS, CARL HANSER VERLAG, MUENCHEN, DE, Nr. 3, 1. November 2000 (2000-11-01), Seite 8,10 XP001008932 ISSN: 0937-7069
- HAENSCH D ET AL: "ENTSCHEIDEND SIND DIE NAEHTE" LASER PRAXIS, CARL HANSER VERLAG, MUENCHEN, DE, Nr. 2, Juni 1999 (1999-06), Seiten 16-18, XP000831529 ISSN: 0937-7069
- "LASER TECHNOLOGY MAKES SIGNIFICANT ADVANCEMENTS" MODERN PLASTICS INTERNATIONAL, MCGRAW-HILL,INC. LAUSANNE, CH, Bd. 30, Nr. 3, März 2000 (2000-03), Seite 28 XP000958237 ISSN: 0026-8283

## Beschreibung

Die Erfindung betrifft eine Vorrichtung zum Verschweißen von Werkstückteilen mittels Laserstrahlen, insbesondere von Gehäuseteilen für Stellelemente, wobei die aus Kunststoff bestehenden Werkstückteile zumindest in einem Fügebereich derselben aneinandergelegt sind.

Die Erfindung betrifft ferner ein Verfahren zum Verschweißen von Werkstückteilen mittels Laserstrahlen, insbesondere von Gehäuseteilen für Stelletemente, wobei die aus Kunststoff bestehenden Werkstoffteile in einem Fügebereich derselben aneinandergelegt werden.

Aus der EP 0 751 865 B1 ist eine Vorrichtung zum Verschweißen von Werkstückteilen mittels Laserstrahlen bekannt, wobei die aus einem Kunststoff bestehenden Werkstückteile aneinanderliegend in einem randseitigen Fügebereich verschweißt werden. Zu diesem Zweck wird eine Laserstrahlquelle relativ zu den aneinandergelegten Werkstückteilen in dem Fügebereich bewegt, so dass nach und nach eine Schweißnaht zwischen dem zu fügenden Werkstückteilen erzeugt wird. Zur Ermöglichung von Schweißnähten, die in einem dreidimensionalen Raum angeordnet sind, kann eine die Werkstückteile aufnehmende Werkstückaufnahme mittels eines Roboters in die entsprechenden Betriebsstellungen zum Schweißen gebracht werden.

Nachteilig an der bekannten Vorrichtung ist, dass zur Bildung einer Schweißnaht ein punktförmiger Laserstrahl auf den Fügebereich der Werkstückteile gerichtet wird, so dass der Zeitaufwand zum Verschweißen der Werkstückteile entlang einer Kontur oder Randes derselben relativ zeitaufwendig ist. Darüber hinaus ist die Erzeugung der Laserstrahlung relativ aufwendig, da zusätzlich zu der Laserstrahlquelle ein Lichtwellenleiter sowie eine Optik, insbesondere eine Laserlicht-Auskoppeloptik, erforderlich ist. Weiterhin ist eine relativ aufwendige Handhabungseinrichtung, wie beispielsweise ein Roboter, notwendig, um die Relativbewegung zwischen einer Werkstückaufnahme und der entsprechenden Laserlicht-Auskoppeloptik zu gewährleisten.

Aus den Aufsätzen
- H. Pütz et al : "Diodenlaser und Kunststoff - Eine ideale Verbindung", Laseropto, AT Fachverlag, Stuttgart, DE, Bd. 31, Nr. 1, 1999, Seiten 78-79 ist Vorrichtung zum Simultanschweißen von Werkstückteilen mittels Laserstrahlung bekannt,
- D. Hänsch et al: "Entscheidend sind die Nähte" Laser Praxis, Cari Hanser Verlag, München, DE, Nr. 2, Juni 1999, Seiten 16-18,
- Laser technology makes significant advancements" Modem Plastics International; MCGRAW-Hill; Inc. Lausanne, CH, Bd. 30, Nr. 3, März 2000, Seite 28
sind Vorrichtungen und Verfahren zum simultanen Schweißen von Werkstückteilen mittels Laserstrahlung bekannt.

Aus der DE 198 01 346 C1 ist eine Vorrichtung von schmelzfähigem Material durch Laserstrahlung bekannt, wobei der Laserstrahlkopf als Prägewerkzeug selbst auf das Material drückt.

Aus der WO 00/43183A1 ist eine Vorrichtung zum Verschweißen des Endes von rohrartigen Behältern, insbesondere von Tuben bekannt, wobei das offene Ende der Tube umfangseitig über eine Vielzahl von Laserstrahlquellen erwärmt (angeschmolzen) wird. Dabei erfolgt die eigentliche Verschweißung indem das mittels Laserstrahlung zuvor angeschmolzene offene Ende anschließend zwischen zwei linear beweglichen Backen zusammengepresst wird.

Die Patentschrift US 4 963 714 offenbart eine Vorrichtung zum simultanen Aufschmelzen von Lot auf einer Leiterplatte mittels Laserstrahlung.

Aus der WO 96/33838 A1 ist eine Vorrichtung zur Umformung von Werkstücken mittels einer Vielzahl von Laserstrahlquellen bekannt.

Aus der EP 0 997 261 A1 ist ein Laserfügeverfahren zum Verbinden von Werkstückteilen mit einer Maske und einer Niederhalterplatte zum Zusammenpressen der Werkstückteile bekannt, bei dem der Laserstrahl relativ zu den Werkstücksteilen und zur Maske bewegt wird.

Es ist die Aufgabe der Erfindung, eine Vorrichtung und ein Verfahren Zum simultanen Laserschweißen von Werkstückteilen zu schaffen, wobei bei einfacher Handhabung eine zuverlässige Verschweißung ermöglicht werden soll und die Laserstrahlquellen möglichst effizient gekühlt werden sollen.

Die Lösung dieser Aufgabe liefert eine erfindungsgemäße Vorrichtung mit den Merkmalen, dass
- die aus Kunststoff bestehenden Werkstückteile zumindest in einem Fügebereich derselben aneinandergelegt sind und der Fügebereich aus einer Mehrzahl von linienförmigen Fügeabschnitten besteht,
- Laserstrahlquellen auf einer dem Fügebereich zugewandten Seite eines Laserschweißkopfes gehaltert sind,
- unter gleichzeitiger Ansteuerung der Laserstrahlquellen die Werkstückteile in einem einzigen Arbeitsschritt durch gleichzeitiges Verschweißen der jeweiligen Fügeabschnitte zusammengefügt werden,
- der Laserschweißkopf auf seinem den Werkstückteilen zugewandten stimseitigen Ende eine Lochblende mit langlöchern aufweist,
- die Vorrichtung eine in Längsrichtung zwischen der Stirnseite des Laserschweißkopfes und den Werkstückteilen verfahrbar angeordnete Niederhalterplatte aufweist, welche in einer Betriebsstellung des Laserschweißkopfes im Zusammenwirken mit einer Werkstückaufnahme die Werkstückteile zusammenpresst,
- jedem der linienförmigen Fügeabschnitte jeweils mindestens eine Laserstrahlquelle zugeordnet ist und der Laserschweißkopf senkrecht zu den linienförmigen Fügeabschnitten verlaufende Tragwandungen aufweist, an deren den Werkstückteilen zugewandten Enden die Laserstrahlquellen positioniert sind, wobei die Tragwandungen Kühlmittelkanäle zur Durchleitung eines Kühlmittels aufweisen.

Zur Lösung dieser Aufgabe weist das erfindungsgemäße Verfahren die Merkmale auf, dass
- die aus Kunststoff bestehenden Werkstückteile zumindest in einem Fügebereich derselben aneinandergelegt sind und der Fügebereich aus einer Mehrzahl von linienförmigen Fügeabschnitten besteht,
- jedem der linienförmigen Fügeabschnitte jeweils mindestens eine Laserstrahlquelle zugeordnet ist,
- die Laserstrahlquellen auf einer dem Fügebereich zugewandten Seite eines Laserschweißkopfes gehaltert sind,
- die zu fügenden Werkstückteile über eine Werkstückaufnahme relativ zum Laserschweißkopf bewegt und in eine Betriebsstellung des Laserschweißkopfes positioniert werden, in der die Laserstrahlquallen auf Fügeabschnitte der Werkstückteile ausgerichtet sind,
- unter gleichzeitiger Ansteuerung der Laserstrahlquellen die Werkstückteile in einem einzigen Arbeitsschritt durch gleichzeitiges Verschweißen der jeweiligen Fügeabschnitte zusammengefügt werden,
- ein Laserschweißkopf verwendet wird, der auf seinem den Werkstückteilen zugewandten stimseitigen Ende eine Lochblende mit Langlöchern aufweist und der senkrecht zu den linienförmigen Fügeabschnitten verlaufende Tragwandungen aufweist, an deren den Werkstückteilen zugewandten Enden die Laserstrahlquellen positioniert sind, wobei die Tragwandungen Kühlmittelkanäle aufweisen, durch die während des Betriebs der Laserstrahlquellen ein Kühlmittel geleitet wird,
- die Werkstückteile aneinanderliegend in der Werkstückaufnahme bereitgestellt werden,
- die Werkstückaufnahme senkrecht zu der Laserabstrahlrichtung relativ zu dem Laserschweißkopf bewegt wird, bis die Laserstrahlquellen und die Lochblende des Laserschweißkopfes fluchtend zu den zu verbindenden Fügeabschnitten der Werkstückteite angeordnet sind,
- eine in Längsrichtung zwischen der Stirnseite des Laserschweißkopfes und den Werkstückteilen verfahrbar angeordnete Niederhalterplatte verwendet wird, welche in der Betriebsstellung des Laserschweißkopfes im Zusammenwirken mit der Werkstückaufnahme die Werkstückteile zusammenpresst,
- die Werkstücktelle zuerst mittels der Niederhalterplatte zusammengepresst und dann durch Ansteuerung der Laserstahlquellen miteinander verschweißt werden.

Ein Vorteil der erfindungsgemäßen Vorrichtung besteht darin, dass durch die Zuordnung von Laserstrahlquellen zu entsprechenden linienförmigen Fügeabschnitten ein gleichzeitiges Verschweißen der jeweiligen Fügeabschnitte ermöglicht wird. Auf diese Weise erfolgt die Verschweißung schnell und ohne dass die Werkstückteile relativ zu dem Laserschweißkopf während des Verschweißvorganges bewegt werden müssen. Weiterhin bietet die erfindungsgemäße Vorrichtung den Vorteil, dass in Abhängigkeit von der Geometrie oder Materialeigenschaften der Fügeabschnitte die Intensität der entsprechenden Laserstrahlquellen eingestellt werden kann. Auf diese Weise kann die Qualität der Verschweißung verbessert werden. Ein weiterer Vorteil ergibt sich daraus, dass eine linienförmige Schweißnaht nicht durch Aneinanderreihung einzelner Schweißpunkte erfolgt, sondern durch gleichzeitiges Beaufschlagen einer quasi linienförmigen Laserstrahlquelle. Auf diese Weise kann eine homogene und qualitativ hochwertige Schweißnaht erzeugt werden. Die Laserstrahlquellen sind dabei auf einer den Werkstückteilen zugewandten Seite von Tragwandungen des Laserschweißkopfes gehaltert. Dadurch, dass die Tragwandungen Kühlmittelkanäle zur Durchleitung eines Kühlmittels aufweisen, kann die von den Laserstrahlquellen erzeugte Wärme wirksam abgeführt werden.

Dabei sind die Laserstrahlquellen parallel versetzt zu den entsprechenden linienförmigen Fügeabschnitten positioniert. Es erstrecken sich die Tragwandungen im Querschnitt zumindest im Fügebereich korrespondierend zu dem Verlauf der zu verschweißenden Fügeabschnitte eines Randes der Werkstückteile. Auf diese Weise kann selektiv bzw. abschnittsweise eine Verschweißung der Werkstückteile erfolgen.

Nach einer Weiterbildung der Erfindung sind die Laserstrahlquellen als Laserdioden-Array's ausgebildet, die sich vorzugsweise linienförmig bzw. rechteckförmig erstrecken. Zur Erzeugung einer Liniennaht ist den Laserstrahlquellen in Lichtabstrahlrichtung jeweils eine linienförmige Lochblende nachgeordnet, deren Länge und Breite auf die zu erzeugende Liniennaht abgestimmt ist. Dabei ist die Lochblende nach Art einer Maske ausgebildet, die zwischen dem Laserschweißkopf einerseits und den Werkstückteilen andererseits angeordnet ist, und zwar am stimseitigen Ende des Laserschweißkopfes.

Nach einer Weiterbildung der Erfindung ist der Laserschweißkopf hohlförmig ausgebildet, wobei der Hohlraum Platz bietet für eine weitere Laserstrahlquelle oder ein Laserlicht-Auskoppelelement, das über einen Lichtwellenleiter mit einer entfernt angeordneten Laserstrahlquelle verbunden ist. Auf diese Weise kann auch in einem mittleren Bereich der Werkstückteils eine Verschweißung erfolgen. Hierdurch kann zur Befestigung von zwei Werkstückteilen insbesondere auf ringsumseitige Verschweißung derselben verzichtet werden.

Ein Vorteil des erfindungsgemäßen Verfahrens besteht darin, dass in einem einzigen Arbeitsschritt ein gleichzeitiges und schnelles Erzeugen einer linienförmigen Schweißnaht ermöglicht wird. Während der Verschweißung haben die Laserstrahlquellen einen definierten Abstand zu den entsprechenden Fügeabschnitten der Werkstückteile. Vorteilhaft sind die Laserstrahlquellen direkt bzw. in unmittelbarer Nähe zu den Werkstückteilen angeordnet, so dass eine optimale linienförmige Schweißnaht erzeugt werden kann.

Vorteilhaft braucht lediglich die Werkstückaufnahme verfahren werden, wobei der Laserschweißkopf unverrückbar und ortsfest angeordnet ist. Damit eine innige und langzeitstabile Verbindung zwischen den Werkstückteilen durch Laserschweißen erfolgen kann, werden die Werkstückteile mit einer Niederhalterplatte an den jeweiligen Rändern spaltfrei zusammengepresst. Nachfolgend erfolgt die Verschweißung in dem Fügebereich durch Ansteuerung der Laserstrahlquellen. Vorteilhaft kann der Laserschweißkopf ortsfest angeordnet sein, so dass er vor mechanischen Belastungen, wie beispielsweise Stößen oder dergleichen, entkoppelt ist, Dadurch, dass die Niederhalterplatte Ausnehmungen aufweist, die zu Öffnungen der Lochblende des Laserschweißkopfes korrespondieren, können die Laserstrahlen nahezu verlustlos durch die Niederhalterplatte in den Fügebereich eindringen.

Weitere Vorteile der Erfindung ergeben sich aus den weiteren Unteransprüchen.

Ein Ausführungsbeispiel der Erfindung wird nachfolgend anhand der Zeichnungen näher erläutert.

Es zeigen:
- Figur 1: eine perspektivische Darstellung eines Laserschweißkopfes,
- Figur 2: einen Längsschnitt durch eine den Laserschweißkopf enthaltenden Vorrichtung entlang der Linie II-II gemäß Figur 4,
- Figur 3: einen Querschnitt durch die den Laserschweißkopf enthaltenden Vorrichtung entlang der Linie III-III gemäß Figur 2,
- Figur 4: eine Ansicht einer auf der einem Werkstück zugewandten Seite des Laserschweißkopfes angeordneten Lochblende,
- Figur 5: eine Draufsicht auf ein Werkstückteil,
- Figur 6: eine vergrößerte Darstellung einer Einzelheit X in Figur 5 und
- Figur 7: eine Ansicht einer zwischen dem Laserschweißkopf und den Werkstückteilen angeordneten Niederhalterplatte.

Die erfindungsgemäße Vorrichtung zum Verschweißen von Werkstückteilen besteht im Wesentlichen aus einem Laserschweißkopf 1, der über eine Niederhalterplatte 2 an einen von zwei als Gehäuseteile 3 ausgebildeten Werkstückteilen anlegbar ist.

Die Gehäuseteile 3 könne beispielsweise zur Aufnahme von Stellelementen, insbesondere von einem elektrischen Motor, Getriebe etc., für eine Zentralverriegelungseinrichtung eines Kraftfahrzeuges dienen.

Die Gehäuseteile 3 sind topfförmig ausgebildet und weisen einen Fügebereich 4 auf, der sich zum einen bereichsweise entlang eines Randes 5 der Gehäuseteile 3 und zum anderen in einem mittleren Bereich 6 der Gehäuseteile 3 erstreckt. Zu diesem Zweck weist der Rand 5 der Gehäuseteile 3 quer zur Wandung der Gehäuseteile 3 abragende Absätze 7 auf, deren Dimension, insbesondere deren Breite b, einen Auftreffbereich für die vom Laserschweißkopf 1 emittierten Laserstrahlen bildet.

Zur Ausbildung einer linienförmigen Schweißnaht 12 weist der Laserschweißkopf 1 an einem den Werkstückteilen zugewandten stirnseitigen Ende eine Lochblende 9 mit Öffnungen 8 auf, deren Dimension zu der Dimension der Absätze 7 korrespondiert. Die Öffnungen 8 der Lochblende 9 geben die Form der Schweißnaht 12 vor. Weiterhin ist die Form der Schweißnaht 12 abhängig von dem Abstand der Lochblende 9 bzw. von Laserstrahlquellen11 des Laserschweißkopfes 1 von den Absätzen 7.

Auf einer den Werkstückteilen zugewandten Seite des Laserschweißkopfes 1 schließt sich demselben die Niederhalterplatte 2 an. Die Niederhalterplatte 2 weist fluchtend zu den Absätzen 7 der Werkstückteile Ausnehmungen 21 auf, die so groß gewählt sind, dass die durch die Öffnungen der Lochblenden 9 begrenzten Laserstrahlen zur Bildung der Schweißnaht 12 auf die jeweiligen Absätze 7 der Werkstückteile quasi verlustlos durchgeleitet werden.

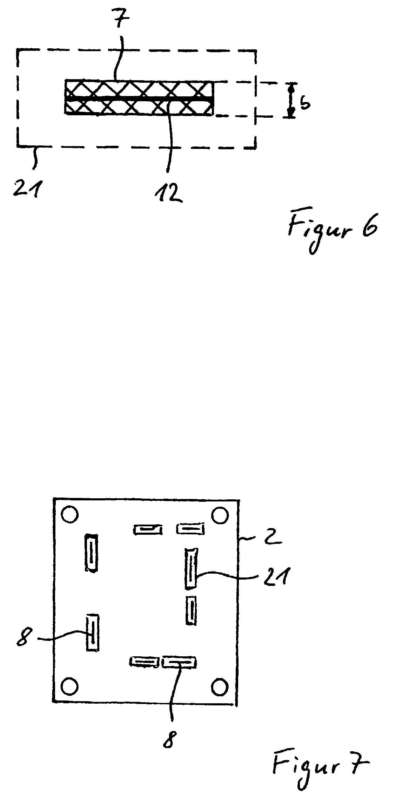

In Figur 5 ist der Bereich der Absätze 7, der durch die als Langlöcher ausgebildeten Öffnungen 8 der Lochblende 9 erfasst wird, schraffiert ausgebildet. In Verbindung mit innerhalb des Laserschweißkopfes 1 angeordneten Laserstrahlquellen 11 wird die linienförmige Schweißnaht 12 erzeugt.

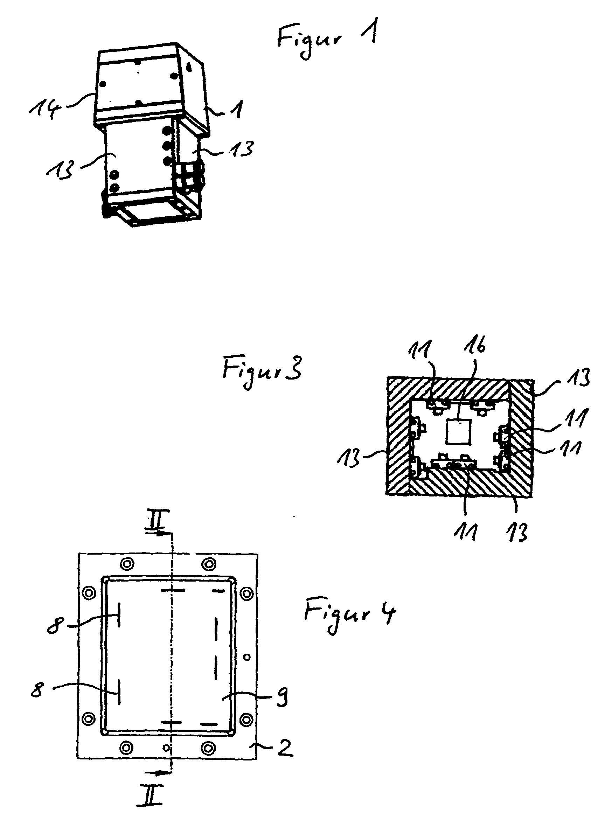

Wie aus Figur 1 ersichtlich ist, ist der Laserschweißkopf 1 im Wesentlichen quaderförmig ausgebildet mit rechtwinklig zueinander angeordneten Tragwandungen 13. Auf einer den Gehäuseteilen 3 abgewandten Seite des Laserschweißkopfes 1 ist ein Anschlusskasten 14 angeordnet, in dem elektrische Anschlussmittel zur Ansteuerung der Laserstrahlquellen 11 angeordnet sind. In einem den Gehäuseteilen 3 zugewandten Endbereich des Laserschweißkopfes 1 bzw. der Tragwandungen 13 sind eine Mehrzahl von Laserstrahlquellen 11 an einer Innenseite der Tragwandungen 13 angeordnet. Die Laserstrahlquellen 11 sind als Laserdioden-Array ausgebildet, die parallel versetzt, d.h. in Längsrichtung des Laserschweißkopfes 1 versetzt, zu den Langlöchern 8 bzw. zu durch die Absätze 7 gebildeten linienförmigen Fügeabschnitte angeordnet sind.

Die Laserstrahlquellen 11 sind in einer gemeinsamen Ebene angeordnet, die senkrecht zu einer Strahlrichtung 15 derselben orientiert ist. Wie im vorliegenden Ausführungsbeispiel ersichtlich, weisen die Laserstrahlquellen 11 eine unterschiedliche Strahlleistung auf, damit eine gleichmäßige und homogene Schweißnaht 12 in unterschiedlichen, parallel zu einer Lichtaustrittsebene 22 sowie einer Abschatterebene 23 verlaufenden Schweißebenen gewährleistet ist. Die Schweißebenen verlaufen entsprechend einer Grenzlinie der unmittelbar aufeinanderliegenden Absätze 7 der Werkstückteile 3. In der Lichtaustrittsebene 22 erstrecken sich die Lichtaustritte der Laserstrahlquellen 11. Die Abschatterebene 23 ist parallel versetzt zu der Lichtaustrittsebene 22 angeordnet und begrenzt die Langlöcher 8 der Lochblende 9 auf einer den Werkstückteilen 3 zugewandten Seite.

Nach einer alternativen Ausführungsform können die Laserstrahlquellen 11 über eine gleiche Strahlleistung verfügen, wobei zur Erzielung der Schweißnähte in unterschiedlichen Schweißebenen die Laserstrahlquellen 11 entsprechend entlang der Längsachse des Laserschweißkopfes 1 versetzt angeordnet sein müssen.

Nach einer weiteren nicht dargestellten Ausführungsform können die Laserstrahlquellen 11 direkt nebeneinander, quasi in optischer Reihenschaltung, angeordnet sein, so dass durch entsprechende Abschattung der Laserstrahlen mittels der Lochblende 9 eine durchgehende und geschlossene Schweißlinie entlang eines Randes der Werkstückteile erzielbar ist. Dadurch, dass die Schweißlinie beabstandet zu der Abschatterebene 23 angeordnet ist, kann durch entsprechende Anordnung der Langlöcher 8 der Lochblende 9 der Effekt genutzt werden, dass die Laserstrahlen entsprechend eines kegelförmigen Strahlenbündels aus der Lochblende 9 austreten. Hierdurch können die randnahen Strahlen der durch die dem benachbarten Absatz 7 zugeordneten Langlöcher 8 der Lochblende 9 hindurchgehenden Strahlenbündel, die in einem spitzen Winkel auf den Absatz 7 auftreffen, aufsummiert werden, so dass eine homogene und gleichmäßige Schweißnaht über die gesamte Länge erzeugt wird.

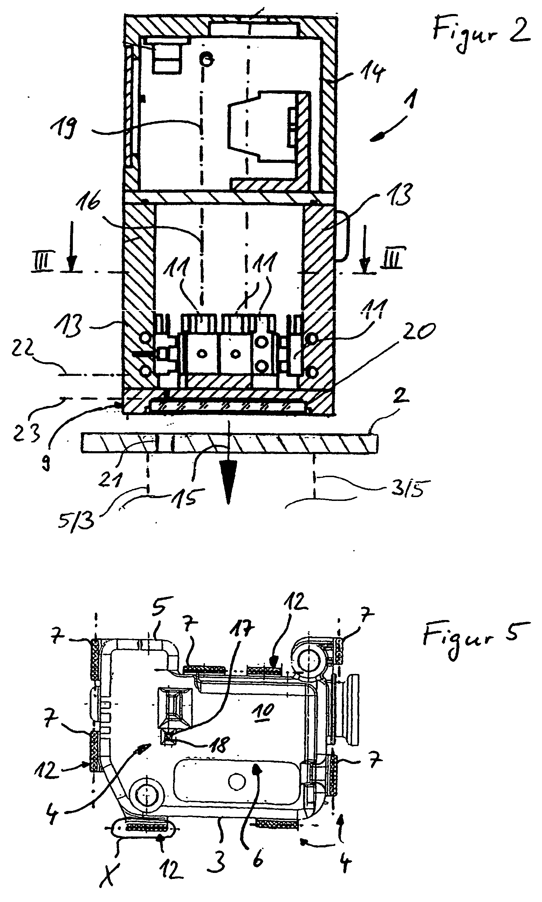

Wie aus Figur 2 ersichtlich ist, liegt die Niederhalterplatte 2 unmittelbar auf dem dem Laserschweißkopf 1 zugewandten Werkstückteil 3 an. Dabei drückt die Niederhalterplatte 2 auf das entsprechende Werkstückteil derart, dass die Ränder 5 der Werkstückteile 3 spaltfrei aneinanderliegen. In dem vorliegenden Ausführungsbeispiel ist der Niederhalter 2 in Längsrichtung des Laserschweißkopfes 1 verschieblich angeordnet, wobei er in einer Ausgangsstellung an einer Stirnseite der Lochblende 9 anliegt und in einer Betriebsstellung des Laserschweißkopfes 1 im Zusammenwirken mit der Werkstückaufnahme die Werkstückteile zusammenpresst. Die Niederhalterplatte 2 besteht im Wesentlichen aus einem für Laserlicht nicht transparenten Material. Alternativ kann die Niederhalterplatte 2 auch als Glasplatte mit entsprechenden Aussparungen ausgebildet sein.

Der Laserschweißkopf 1 ist hohlförmig und auf einer den Gehäuseteilen 3 zugewandten Seite im Querschnitt rechteckförmig ausgebildet, wobei der Verlauf der die Laserstrahlquellen 11 tragenden Tragwandungen 13 zu dem Verlauf des Randes 5, zumindest im Fügebereich 4, der Gehäuseteile 3 korrespondiert. Der Hohlraum des Laserschweißkopfes 1 bietet die Möglichkeit zusätzlich eine Laserstrahlquelle oder - wie in Figur 2 und 3 dargestellt - ein Laserlicht-Auskoppelelement 16 in der Ebene der Laserstrahlquellen 11 anzuordnen, so dass in dem mittleren Bereich 6 der Gehäuseteile 3 zusätzlich eine punktförmige Verschweißung 17 derselben erfolgen kann. Zu diesem Zweck weist das dem Laserschweißkopf 1 zugewandte Gehäuseteil 3 eine Vertiefung 18 auf, so dass der Schweißpunkt 17 bzw. die Schweißfläche im Wesentlichen in der Ebene der am Rand 5 angeordneten linienförmigen Fügeabschnitte 7 liegt. Das Laserlicht-Auskoppelelement 16 ist vorzugsweise als eine Optik ausgebildet mit einem sich an die Optik anschließenden Lichtwellenleiter 19, der an einem zu derselben abgewandten Ende eine nicht dargestellte Fokussieroptik aufweist zur Einleitung der Laserstrahlung einer entfernt angeordneten Laserstrahlquelle.

Zur Ableitung der durch die Laserstrahlquellen 11 erzeugten Wärme sind die Tragwandungen 13 als Kühlkörper ausgebildet, die über Kühlmittelkanäle verfügen, in dem ein Kühlmittel, vorzugsweise Wasser, hindurchgeleitet wird. Der Laserschweißkopf 1 wird an einer den Gehäuseteilen 3 zugewandten Stirnseite über eine Glasplatte 20 der Lochblende 9 flächig begrenzt.

Zum Verschweißen der Gehäuseteile 3 an den linienförmigen Fügeabschnitten 7 sowie im mittleren Bereich 6 werden die randseitig aneinandergelegten Gehäuseteile 3 in einer Werkstückaufnahme bereitgehalten und an der die Glasplatte 20 aufweisenden Stirnseite derart positioniert, dass die Laserstrahlquellen 11 bzw. die Langlöcher 8 der Lochblende 9 zu den Fügeabschnitten 7 korrespondieren. Nach erfolgter Positionierung der Werkstückaufnahme bzw. der Gehäuseteile 3 in Relation zu dem Laserschweißkopf 1 wird die zwischen der Stirnseite des Laserschweißkopfes 1 und den Gehäuseteilen 3 angeordnete Niederhalterplatte 2 in Richtung der Gehäuseteile 3 verfahren, so dass die Gehäuseteile 3 am Rand 5 derselben zusammengepresst werden im Anschluss erfolgt durch gleichzeitige Ansteuerung der Laserstrahlquellen 11 ein gleichzeitiges Verschweißen der linienförmigen Fügeabschnitte 7 am Rand 5 der Gehäuseteile 3 einerseits und in einem mittleren Bereich 6 der Gehäuseteile 3 andererseits. Nach Beendigung des Schweißvorganges wird die Niederhalterplatte 2 in Richtung der Stirnseite des Laserschweißkopfes 1 verfahren, so dass die Werkstückaufnahme mit den zusammengefügten Gehäuseteilen 3 vorzugsweise quer zur Strahlrichtung 5 zurückbewegt und einer weiteren Arbeitsstation des Herstellungsprozesses zugeführt werden kann.

Zu diesem Zweck ist das dem Laserschweißkopf 1 zugewandte Gehäuseteil 3 für die Laserstrahlen transparent und das dem Laserschweißkopf 1 abgewandte Gehäuseteil 3 für die Laserstrahlen absorbierend ausgebildet.

Nach Beendigung des Schweißvorganges wird die Werkstückaufnahme mit den zusammengefügten Gehäuseteilen 3 vorzugsweise quer zur Strahlrichtung 15 zurückbewegt und einer weiteren Arbeitsstation des Herstellungsprozesses zugeführt.

## Patentansprüche

1. Vorrichtung zum Verschweißen von Werkstücksteilen (3) mittels Laserstrahlen,
- wobei die aus Kunststoff bestehenden Werkstückteile (3) zumindest in einem Fügebereich (4) derselben aneinandergelegt sind und der Fügebereich (4) aus einer Mehrzahl von linienförmigen Fügeabschnitten (7) besteht,
- wobei Laserstrahlquellen (11) auf einer dem Fügebereich (4) zugewandten Seite eines Laserschweißkopfes (1) gehaltert sind,
- wobei unter gleichzeitiger Ansteuerung der Laserstrahlquellen (11) die Werkstückteile (3) in einem einzigen Arbeitsschritt durch gleichzeitiges Verschweißen der jeweiligen Fügeabschnitte (7) zusammengefügt werden,
- wobei der Laserchweißkopf (1) auf seinem den Werkstückteilen (3) zugewandten stimseitigen Ende eine Lochblende (9) mit Langlöchern (8) aufweist,
- wobei die Vorrichtung eine in Längsrichtung zwischen der Stirnseite des Laserschweißkopfes (1) und den Werkstückteilen (3) verfahrbar angeordnete Niederhalterplatte (2) aufweist, welche in einer Betriebsstellung des Laserschweißkopfes (1) im Zusammenwirken mit einer Werkstückaufnahme die Weskstückteile (3) zusammenpresst,
**dadurch gekennzeichnet, dass** jedem der linienförmigen Fügeabschnitte (7) jeweils mindestens eine Laserstrahlquelle (11) zugeordnet ist und dass der Laserschweißkopf (1) senkrecht zu den linienförmigen Fügeabschnitten (7) verlaufende Tragwandungen (13) aufweist, an deren den Werkstückteilen (3) zugewandten Enden die Laserstrahlquellen (11) positioniert sind, wobei die Tragwandungen (13) Kühlmilttelkanäle zur Durchleitung eines Kühlmittels aufweisen.

2. Vorrichtung nach Anspruch 1, **dadurch gekennzeichnet, dass** die Nederhalterplatte (2) Ausnehmungen (21) aufweist, die zu den Langlöchern (8) der Lochblende (9) des Laserschweißkopfes (1) korrespondieren, wobei die Ausnehmungen (21) so groß sind, dass die durch die Langlöcher (8) der Lochblende (9) begrenzten Laserstrahlen verlustlos durchgeleitet werden.

3. Vorrichtung nach einem der vorstehenden Ansprüche, **dadurch gekennzeichnet, dass** die Fügeabschnitte (7) durch quer zu der Laserabstrahlrichtung (15) verlaufende Absätze (7) eines Randes (5) der Weckstückteile (3) gebildet sind und dass die Tragwandungen (13) des Lasenchweißkopfes (1) derart ausgebildet sind, dass die Laserstrahlquellen (11) parallel versetzt zu dem Verlauf der Fügeabschnitte (7) positioniert sind.

4. Vorrichtung nach einem der vorstehenden Ansprüche, **dadurch gekennzeichnet, dass** die Tragwandungen (13) des Laserschweißkopfes (1) im Querschnitt zumindest im Fügebereich (4) dem Verlauf des Randes (5) der Werkstückteile (3) folgen und dass die Fügeabschnitte (7) am Rand (5) der Werkstückteile (3) angeordnet sind.

5. Vorrichtung nach einem der vorstehenden Ansprüche, **dadurch gekennzeichnet, dass** der Laserschweißkopf (1) hohlförmig ausgebildet ist und durch die Tragwandungen (13) begrenzt ist, wobei in einem Hohlraum eine Laserstrahlquelle oder ein Laserlicht-Auskoppelelement (16) angeordnet ist zum Fügen der Werkstückteile (3) in einem mittleren Bereich (6) derselben.

6. Vorrichtung nach einem der vorstehenden Ansprüche 1 bis 5, **dadurch gekennzeichnet, dass** die Laserstrahlquellen (11) an einer Innenseite der Tragwandungen (13) befestigt sind.

7. Vorrichtung nach einem der Ansprüche 1 bis 6, **dadurch gekennzeichnet, dass** die Laserstrahlquelle (11) als ein Laserdioden-Array ausgebildet ist.

8. Verfahren zum Verschweißen von Werkstücksteilen (3) mittels Laserstrahlen,
- wobei die aus Kunststoff bestehenden Werkstückteile (3) zumindest in einem Fügebereich (4) derselben aneinandergelegt sind und der Fügebereich (4) aus einer Mehrzahl von linienförmigen Fügeabschnitten (7) besteht,
- wobei jedem der linienförmigen Fügeabschnitte (7) jeweils mindestens eine Laserstrahlquelle (11) zugeordnet ist,
- wobei die Laserstrahlquellen (11) auf einer dem Fügebereich (4) zugewandten Seite eines LaserschweiBkopfes (1) gehaltert sind,
- wobei die zu fügenden Werkstückteile (3) über eine Werkstückaufnahme relativ zum Laserschweißkopf (1) bewegt und in eine Betriebsstellung des Laserschweißkopfes (1) positioniert werden, in der die Laserstrahlquellen (11) auf Fügeabschnitte (7) der Werkstückteile (3) ausgerichtet sind,
- wobei unter gleichzeitiger Ansteuerung der Laserstrahlquellen (11) die Werkstückteile (3) in einem einzigen Arbeitsschritt durch gleichzeitiges Verschweißen der jeweiligen Fügeabschnitte (7) zusammengefügt werden,
- wobei ein Laserschweißkopf (1) verwendet wird, der auf seinem den Werkstückteilen zugewandten stirnseitigen Ende eine Lochblende (9) mit Langlöchern (8) aufweist
**dadurch gekennzeichnet, dass** der Laserschweißkopf senkrecht zu den linienformigen Fügeabschnitten (7) verlaufende Tragwandungen (13) aufweist, an deren den Werkstückteilen (3) zugewandten Enden die Laserstrahlquellen (11) positioniert sind, wobei die Tragwandungen (13) Kühlmittelkanäle aufweisen, durch die während des Betriebs der Laserstrahlquellen ein Kühlmittel geleitet wird,
- die Werkstückteile (3) aneinanderliegend in der Werkstückaufnahme bereitgestellt werden,
- die Werkstückaufnahme senkrecht zu der Laserabstrahlrichtung (15) relativ zu dem Laserschweißkopf(1) bewegt wird, bis die Laserstrahlquellen (11) und die Lochblende (9) des Laserschweißkopfes (1) fluchtend zu den zu verbindenden Fügeabschnitten (7) der Werkstückteile (3) angeordnet sind,
- eine in Längsrichtung zwischen der Stirnseite des Laserschweißkopfes (1) und den Werkstückteilen (3) verfahrbar angeordnete Niederhalterplatte (2) verwendet wird, welche in der Betriebsstellung des Laserschweißkopfes (1) im Zusammenwirken mit der Werkstückaufnahme die Werkstückteile (3) zusammenpresst,
- die Werkstückteile (3) zuerst mittels der Niederhalterplatte (2) zusammengepresst und dann durch Ansteuerung der Laserstahlquellen (11) miteinander verschweißt werden.

## Claims

1. Apparatus for welding workpieces (3) by means of laser beams, where
- workpieces made of plastic (3) are laid together in at least one of their joining areas (4), and the joining area (4) is composed of a plurality of linear joining sections (7);
- laser beam sources (11) are held at the side of a laser welding head (1) facing toward the joining area (4); and
- the workpieces (3) are, under simultaneous control of the laserbeam sources (11), joined in one single working step by simultaneous welding of the respective joining sections (7); and
- the laser welding head (1) comprises on its end facing towards the workpieces (3) a pinhole diaphragm (9) with elongated holes (8); and
- the apparatus comprises a holding-down plate (2) arranged to be movable in the longitudinal direction between the end of the laser welding head (1) and the workpieces (3) which, in an operational position of the laser welding head (1) compresses the workpieces (3) in co-operation with a workpiece accommodation,
**characterised in that** each of the linear joining sections (7) is associated with at least one laser beam source (11), and the laser welding head (1) comprises supporting walls (13) extending perpendicularly to the linear joining sections (7), and at its ends facing toward the workpieces (3) are positioned laser beam sources (11), and the supporting walls (13) include cooling medium channels for passing through a cooling medium.

2. Apparatus according to Claim 1, **characterised in that** the holding-down plate (2) comprises cutouts (21) which correspond with the longitudinal holes (8) of the pinhole diaphragm (9) of the laser welding head (1), and the cutouts (21) are so large that laser beams defined by the elongated holes (8) of the pinhole diaphragm (9) can be passed through without loss.

3. Apparatus according to one of the above claims, **characterised in that** the joining sections (7) are formed by steps (7) of an edge (5) of the workpieces (3) which extend transversely to the laser beam direction (15), and the supporting walls (13) of a laser welding head (1) are designed in such a manner that the laser beam sources (11) are positioned parallel transposed to the course of the joining sections (7).

4. Apparatus according to one of the above claims, **characterised in that** the supporting walls (13) of the laser welding head (1) cross-sectionally follow at least in the joining area (4) the course of the edge (5) of the workpieces (3), and the joining sections (7) are arranged at the edge (5) of the workpiece portions (3).

5. Apparatus according to one of the above claims, **characterised in that** the laser welding head (1) is hollow in design and defined by the supporting walls (13), and in one hollow area is arranged a laser beam source or a laser light uncoupling element (16) for joining workpieces (3) in one of its middle areas (6).

6. Apparatus according to one of the above Claims 1 to 5, **characterised in that** the laser beam sources (11) are attached to an inside of the supporting walls (13).

7. Apparatus according to one of Claims 1 to 6 **characterised in that** the laser beam source (11) is designed as a laser-diode array.

8. Method for welding workpieces (3) by means of laser beams, where
• workpieces (3) of plastic are laid next to at least one of its joining areas (4), and the joining area (4) is composed of a plurality of linear joining sections (7);
• each linear joining section (7) is associated with at least one laser beam source (11);
• the laser beam sources (11) are held on the side of a laser welding head (1) facing toward the joining area (4);
• workpieces (3) to be joined are moved via a workpiece accommodation relative to laser welding head (1) and positioned in an operational position of the laser welding head (1) where the laser beam sources (11) are oriented towards joining sections (7) of the workpieces (3);
• whilst simultaneously controlling the laser beam sources (11), the workpieces (3) are joined in one single operating step by simultaneously welding the respective joining sections (7) together; and
• a laser welding head (1) is used which comprises at its end facing towards the workpieces a pinhole diaphragm (9) with elongated holes (8), **characterised in that** the laser welding head comprises support walls (13) extending perpendicularly to the linear joining sections (7) and at their ends facing towards the workpieces (3) are positioned laser beam sources (11), and the support walls (13) having cooling medium channels through which a cooling medium is ducted during operation of the laser beam sources;
• the workpieces (3) are made available next to one another in the tool accommodation;
• the workpiece accommodation is moved perpendicularly to the laser emitting direction (15) relative to the laser welding head (1) until the laser beam sources (11) and the pinhole diaphragm (9) of the laser welding head (1) are arranged adjacent the joining sections (7) of the workpieces (3) which are to be joined;
• a holding-down plate (2) is used, arranged to be movable in the longitudinal direction between the end side of the laser welding head (1) and the workpieces (3), which in the operating position of the laser welding head (1) compresses the workpieces (3) in co-operation with the tool accommodation;
• the workpieces (3) are first compressed by means of the holding-down plate (2) and then welded together by controlling the laser beam sources (11).

## Revendications

1. Dispositif de soudage de parties de pièces à oeuvrer (3) au moyen de faisceaux laser, dans lequel
- les parties de pièces à oeuvrer (3) en matière plastique sont juxtaposées au moins dans une région d'assemblage (4) d'elles-mêmes et la région d'assemblage (4) est constituée par une multitude de tronçons d'assemblage (7) en forme de lignes,
- des sources de faisceau laser (11) sont fixées sur une face tournée vers la région d'assemblage (4), d'une tête de soudeuse au laser (1),
- sous pilotage simultané des sources de faisceau laser (11), les parties de pièces à oeuvrer (3) sont assemblées dans une seule étape de travail par soudage simultané des tronçons d'assemblage (7) respectifs,
- la tête de soudeuse au laser (1) présente sur son extrémité frontale tournée vers les parties de pièces à oeuvrer (3) un diaphragme à trous (9) avec des trous oblongs (8),
- le dispositif présente une plaque serre-flan (2) agencée de manière déplaçable en direction longitudinale entre la face frontale de la tête de soudeuse au laser (1) et les parties de pièces à oeuvrer (3), plaque qui presse les unes contre les autres les parties de pièces à oeuvrer (3) dans une position de fonctionnement de la tête de soudeuse au laser (1) en coopération avec un logement de pièce à oeuvrer,
**caractérisé en ce qu'**à chaque tronçon d'assemblage (7) en forme de ligne est associée au moins une source de faisceau laser (11) et **en ce que** la tête de soudeuse au laser (1) présente des parois portantes (13) s'étendant perpendiculairement aux tronçons d'assemblage (7) en forme de lignes ; les sources de faisceau laser (11) sont positionnées aux extrémités des parois qui sont tournées vers les parties de pièces à oeuvrer (3), et les parois portantes (13) présentent des canaux d'agent de refroidissement pour conduire un agent de refroidissement.

2. Dispositif selon la revendication 1, **caractérisé en ce que** la plaque serre-flan (2) présente des évidements (21) qui correspondent aux trous oblongs (8) du diaphragme à trous (9) de la tête de soudeuse au laser (1), les évidements (21) étant si grands que les faisceaux laser délimités par les trous oblongs (8) du diaphragme à trous (9) peuvent passer à travers ceux-ci sans perte.

3. Dispositif selon l'une des revendications précédentes, **caractérisé en ce que** les tronçons d'assemblage (7) sont formés par des talons (7), s'étendant transversalement à la direction du faisceau laser (15), d'un bord (5) des parties de pièces à oeuvrer (3) et **en ce que** les parois portantes (13) de la tête de soudeuse au laser (1) sont réalisées de telle sorte que les sources de faisceau laser (11) sont positionnées en décalage parallèle au tracé des tronçons d'assemblage (7).

4. Dispositif selon l'une des revendications précédentes, **caractérisé en ce que** les parois portantes (13) de la tête de soudeuse au laser (1) suivent en section transversale, au moins dans la zone d'assemblage (4), le tracé du bord (5) des parties de pièces à oeuvrer (3) et **en ce que** les tronçons d'assemblage (7) sont agencés sur le bord (5) des parties de pièces à oeuvrer (3).

5. Dispositif selon l'une des revendications précédentes, **caractérisé en ce que** la tête de soudeuse au laser (1) est réalisée creuse et est délimitée par les parois portantes (13), et dans une cavité est agencée une source de faisceau laser ou un élément de découplage de lumière à laser (16) pour assembler les parties de pièces à oeuvrer (3) dans une région médiane (6) de celles-ci.

6. Dispositif selon l'une des revendications précédentes 1 à 5, **caractérisé en ce que** les sources de faisceau laser (11) sont fixées sur une face intérieure des parois portantes (13).

7. Dispositif selon l'une des revendications précédentes 1 à 6, **caractérisé en ce que** la source de faisceau laser (11) est réalisée sous forme de réseau à diodes laser.

8. Procédé pour souder des parties de pièces à oeuvrer (3) au moyen de faisceaux laser,
- dans lequel les parties de pièces à oeuvrer (3) en matière plastique sont juxtaposées au moins dans une région d'assemblage (4) d'elle-même et la région d'assemblage (4) est constituée par une multitude de tronçons d'assemblage (7) en forme de lignes,
- dans lequel à chacun des tronçons d'assemblage (7) en forme de lignes est associée au moins une source de faisceau laser (11),
- dans lequel les sources de faisceau laser (11) sont fixées sur une face, tournée vers la région d'assemblage (4), d'une tête de soudeuse au laser (1),
- dans lequel les parties de pièces à oeuvrer (3) à assembler sont déplacées via un logement de pièce à oeuvrer par rapport à la tête de soudeuse au laser (1) et positionnées dans une position de fonctionnement de la tête de soudeuse au laser (1) dans laquelle les sources de faisceau laser (11) sont orientées sur des tronçons d'assemblage (7) des parties de pièces à oeuvrer (3),
- dans lequel, sous pilotage simultané des sources de faisceau laser (11), les parties de pièces à oeuvrer (3) sont assemblées dans une seule étape de travail par soudage simultané des tronçons d'assemblage (7) respectifs,
- dans lequel on utilise une tête de soudeuse au laser (1) qui présente sur son extrémité frontale tournée vers les parties de pièces à oeuvrer (3) un diaphragme à trous (9) avec des trous oblongs (8),
**caractérisé en ce que**
la tête de soudeuse au laser (1) présente des parois portantes (13) s'étendant perpendiculairement aux tronçons d'assemblage (7) en forme de lignes ; les sources de faisceau laser (11) sont positionnées aux extrémités des parois qui sont tournées vers les parties de pièces à oeuvrer (3), et les parois portantes (13) présentent des canaux d'agent de refroidissement à travers lesquels un agent de refroidissement est conduit pendant le fonctionnement des sources de faisceau laser (11),
- les parties de pièces à oeuvrer (3) sont mises à disposition les unes à côté des autres dans le logement de pièce à oeuvrer,
- le logement de pièce à oeuvrer est déplacé perpendiculairement à la direction du faisceau laser (15) par rapport à la tête de soudeuse au laser (1) jusqu'à ce que les sources de faisceau laser (11) et le diaphragme à trous (9) de la tête de soudeuse au laser (1) soient agencés en alignement avec les tronçons d'assemblage (7) à relier, des parties de pièces à oeuvrer (3),
- on utilise une plaque serre-flan (2) agencée de manière déplaçable en direction longitudinale entre la face frontale de la tête de soudeuse au laser (1) et les parties de pièces à oeuvrer (3), plaque qui presse les unes contre les autres les parties de pièces à oeuvrer (3) dans une position de fonctionnement de la tête de soudeuse au laser (1) en coopération avec un logement de pièce à oeuvrer,
- les parties de pièces à oeuvrer (3) sont pressées les unes contre les autres tout d'abord au moyen de la plaque serre-flan (2) et elles sont ensuite soudées les unes aux autres par pilotage des sources de faisceau laser (11).
